# EUROPÄISCHE PATENTSCHRIFT

(11) **EP 2 855 216 B1**
(45) Veröffentlichungstag und Bekanntmachung des Hinweises auf die Patenterteilung: **19.10.2016**
(21) Anmeldenummer: 13721267.6
(22) Anmeldetag: 10.05.2013
(51) Int. Cl.: B60T 7/08, B60T 13/74

(54) **FESTSTELLBREMSENSYSTEM FÜR EIN FAHRZEUG**
PARKING BRAKE SYSTEM FOR A VEHICLE
SYSTÈME DE FREIN DE STATIONNEMENT POUR UN VÉHICULE

(30) Priorität: 26.05.2012 DE 102012010562
(43) Veröffentlichungstag der Anmeldung: 08.04.2015
(73) Patentinhaber: Audi AG, 85045 Ingolstadt (DE)
(72) Erfinder: FÖRSTER, Kilian, 92345 Hainsberg (DE); HENRICH, Uwe, 85072 Eichstätt (DE); STRUTZ, Timo, 85139 Wettstetten (DE); MICHENTHALER, Christof, 85080 Gaimersheim (DE)
(74) Vertreter: Reichert, Thomas Klaus
(86) Internationale Anmeldenummer: PCT/EP2013/001396
(87) Internationale Veröffentlichungsnummer: WO 2013/178323

(56) Entgegenhaltungen:
- WO-A1-2009/074252
- DE-A1- 19 751 431
- DE-A1-102007 037 685
- DE-A1-102011 084 534

## Beschreibung

Die Erfindung betrifft ein Feststellbremsensystem für ein Fahrzeug, insbesondere für einen Kraftwagen, der im Oberbegriff des Patentanspruchs 1 angegebenen Art.

Aus der DE 197 51 431 A1 ist ein solches Feststellbremsensystem für einen Kraftwagen als bekannt zu entnehmen. Das Feststellbremsensystem umfasst zwei Steuereinheiten, mittels welchen diesen jeweils zugeordnete Aktuatoren steuerbar sind, welche ihrerseits dazu ausgelegt sind, jeweilige Radbremsen des Feststellbremsensystems zu betätigen. Die Steuereinheiten können darüber hinaus über gesonderte Leitungen wahlweise mit einer ersten oder einer zweiten Energiequelle verbunden werden.

Die DE 10 2007 037 685 A1 zeigt ein Feststellbremsensystem für einen Kraftwagen mit einer zentralen Steuereinheit, mittels welcher zwei Aktuatoren angesteuert werden können, um jeweilige Radbremsen des Feststellbremsensystems zu betätigen.

Die WO 2009/074252 A sowie die DE 10 2011 084 534 A zeigen jeweils ein Feststellbremsensystem, bei dem eine einzige Eingabeeinheit mit zwei Steuergeräten verbunden ist, die jeweils einen Aktuator steuern. Dabei ist jedes der Steuergeräte mit einer eigenen Spannungsquelle verbunden.
Es ist die Aufgabe der vorliegenden Erfindung, ein ausfallsicheres Feststellbremsensystem bereitzustellen, mittels welchem eine zuverlässige Sicherung und Entsicherung eines Fahrzeugs gegen ein Wegrollen erzielbar ist.

Diese Aufgabe wird durch ein Feststellbremsensystem für ein Fahrzeug mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Ein erfindungsgemäßes Feststellbremsensystem für ein Fahrzeug, insbesondere für einen Kraftwagen, umfasst zwei Steuereinheiten, mittels welchen zwei Aktuatoren steuerbar sind, welche dazu ausgelegt sind, jeweilige Radbremsen zu betätigen, wobei die Steuereinheiten über gesonderte Leitungen mit einer Energiequelle verbunden sind, wobei sich das erfindungsgemäße Feststellbremsensystem dadurch auszeichnet, dass ausschließlich eine der Steuereinheiten mit einer Bedieneinrichtung verbunden ist, welche dazu ausgelegt ist, Signale zur Betätigung der Radbremsen an diese Steuereinheit zu übertragen, welche dazu ausgelegt ist, in Abhängigkeit von den Signalen zur Betätigung der Radbremsen zumindest einen der Aktuatoren zu steuern. Während es gemäß dem Gegenstand der DE 197 51 431 A1 vorgesehen ist, die beiden Steuereinheiten des Feststellbremsensystems mit einer Bedieneinrichtung zu verbinden, ist es demgegenüber erfindungsgemäß vorgesehen, ausschließlich eine der Steuereinheiten mit der Bedieneinrichtung zu verbinden. Durch Vermeidung der redundanten Verbindung der Steuereinheiten mit der Bedieneinheit wird eine vereinfachte und kostengünstigere Struktur des Feststellbremsensystems erzielt, wobei nach wie vor eine zuverlässige Sicherung und Entsicherung eines Fahrzeugs gegen ein Wegrollen erzielbar ist.

Eine vorteilhafte Ausführungsform der Erfindung sieht vor, dass eine der Steuereinheiten mit einer weiteren Energiequelle verbunden ist. Dadurch kann sichergestellt werden, dass selbst wenn die eine Energiequelle ausfallen sollte, mit welcher beide Steuereinheiten verbunden sind, die Funktionsfähigkeit von zumindest einer der Steuereinheiten sichergestellt werden kann, sodass eine zuverlässige Sicherung und Entsicherung eines Fahrzeugs gegen ein Wegrollen mittels des Feststellbremsensystems erzielbar ist. Durch die redundante Energieversorgung des Feststellbremsensystems ist es darüber hinaus möglich, bei Fahrzeugen mit Automatikgetrieben üblicherweise vorgesehene Parksperren entfallen zu lassen, wodurch eine insgesamt kostengünstigere Auslegung des gesamten Fahrzeugs erzielbar ist.

Bei einer weiteren vorteilhaften Ausführungsform der Erfindung sind die Steuereinheiten über eine Datenkommunikationsschnittstelle miteinander verbunden, wobei die Steuereinheiten dazu ausgelegt sind, über die Datenkommunikationsschnittstelle miteinander zu kommunizieren. Bei der Datenkommunikationsschnittstelle kann es sich beispielsweise um einen CAN-Bus, einen Flexray, ein SPI-Bussystem, ein I²C-Bussystem oder dergleichen handeln. Dadurch können die von der einen Steuereinheit empfangenen Signale zum Betätigen der Radbremsen an die andere Steuereinheit übertragen werden, wobei eine koordinierte Betätigung der Aktuatoren dadurch auf einfache Weise ermöglicht wird.

Gemäß einer weiteren vorteilhaften Ausführungsform der Erfindung ist es vorgesehen, dass die Steuereinheiten jeweils dazu ausgelegt sind, beide Aktuatoren zu steuern. Selbst beim Ausfall von einer der Steuereinheiten wird durch die redundante Auslegung die Funktionsfähigkeit des Feststellbremsensystems sichergestellt.

In einer weiteren vorteilhaften Ausführungsform der Erfindung sind die Steuereinheiten dazu ausgelegt, in Abhängigkeit von wenigstens einem, eine Bewegung des Fahrzeugs charakterisierenden Signal die Aktuatoren automatisch zu steuern. Beispielsweise können die Steuereinheiten dazu ausgelegt sein, Signale von Drehzahl- und/oder Beschleunigungssensoren zu verarbeiten und auf Basis dieser Signale die Aktuatoren automatisch zu steuern. Zum einen kann die automatische Betätigbarkeit der Steuereinheiten dazu dienen, einen Fahrer des Fahrzeugs je nach Fahrsituation beim Führen des Fahrzeugs zu unterstützen, beispielsweise im Sinne einer Berganfahrhilfe oder dergleichen, und zum anderen kann bei einer Störung der Übertragung der Signale zur Betätigung der Radbremsen an eine der Steuereinheiten sichergestellt werden, dass das Feststellbremsensystem auch in einem solchen Falle das Fahrzeug gegen ein Wegrollen sichern kann.

Eine weitere vorteilhafte Ausführungsform der Erfindung sieht vor, dass die nicht mit der Bedieneinrichtung verbundene Steuereinheit in einem Automatikmodus betreibbar ist, falls die mit der Bedieneinrichtung verbundene Steuereinheit und/oder die Bedieneinrichtung eine Betriebsstörung aufweisen. Dadurch wird eine Sicherung und Entsicherung eines Fahrzeugs gegen ein Wegrollen ermöglicht, falls die Signalübertragung von der Bedieneinrichtung an die damit verbundene Steuereinheit gestört sein sollte.

In vorteilhafter Ausgestaltung der Erfindung ist es vorgesehen, dass zumindest eine der Steuereinheiten in einem Steuergerät des Fahrzeugs angeordnet ist, welches dazu ausgelegt ist, zumindest ein von den Aktuatoren verschiedenes Element des Fahrzeugs zu steuern. Beispielsweise kann es sich bei dem Steuergerät um ein ESP-Steuergerät, ein Getriebesteuergerät oder dergleichen handeln, in welches zumindest eine der Steuereinheiten integriert ist. Bereits in einem solchen Steuergerät vorgesehene Komponenten, wie beispielsweise Prozessoren oder dergleichen, und/oder vorhandene Software können dadurch von der Steuereinheit ebenfalls, zumindest teilweise, genutzt werden, sodass das Feststellbremsensystem insgesamt kostengünstiger herstellbar ist. Des Weiteren kann dadurch Bauraum eingespart werden, so dass das Feststellbremsensystem insgesamt kompakter ausgelegt werden kann.
Gemäß einer weiteren vorteilhaften Ausführungsform der Erfindung ist es vorgesehen, dass zumindest eine der Steuereinheiten in einem separaten Steuergerät des Fahrzeugs angeordnet ist. Dadurch kann eine räumliche Trennung zwischen den beiden Steuereinheiten erzielt werden, infolgedessen beispielsweise eine verbesserte Abschirmung der zumindest einen, in dem separaten Steuergerät vorgesehenen Steuereinheit ermöglicht und insgesamt eine Steigerung der Zuverlässigkeit erzielbar ist.

Schließlich ist es gemäß einer alternativen vorteilhaften Ausführungsform der Erfindung vorgesehen, dass die Steuereinheiten jeweils in zwei voneinander verschiedenen Steuergeräten des Fahrzeugs angeordnet sind, welche jeweils dazu ausgelegt sind, zumindest ein von den Aktuatoren verschiedenes Element des Fahrzeugs zu steuern. Somit können beide Steuereinheiten bereits in den Steuergeräten vorgesehene Komponenten, wie beispielsweise Prozessoren oder dergleichen, nutzen, sodass das Feststellbremsensystem insgesamt kostengünstiger und bauraumsparender herstellbar ist. Alternativ ist es auch möglich, dass die Steuereinheiten in einem gemeinsamen Gehäuse angeordnet sind, wobei die Steuereinheiten jedoch innerhalb des gemeinsamen Gehäuses voneinander getrennt, beispielsweise in separaten Kammern oder dergleichen, angeordnet sind. Dadurch wird gewährleistet, dass beispielsweise bei einem Wassereintritt in das gemeinsame Gehäuse aufgrund der separaten Umhausung der Steuereinheiten nicht beide Steuereinheiten gleichzeitig einen Schaden erleiden und ausfallen. Weitere Vorteile, Merkmale und Einzelheiten der Erfindung ergeben sich aus der nachfolgenden Beschreibung bevorzugter Beispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

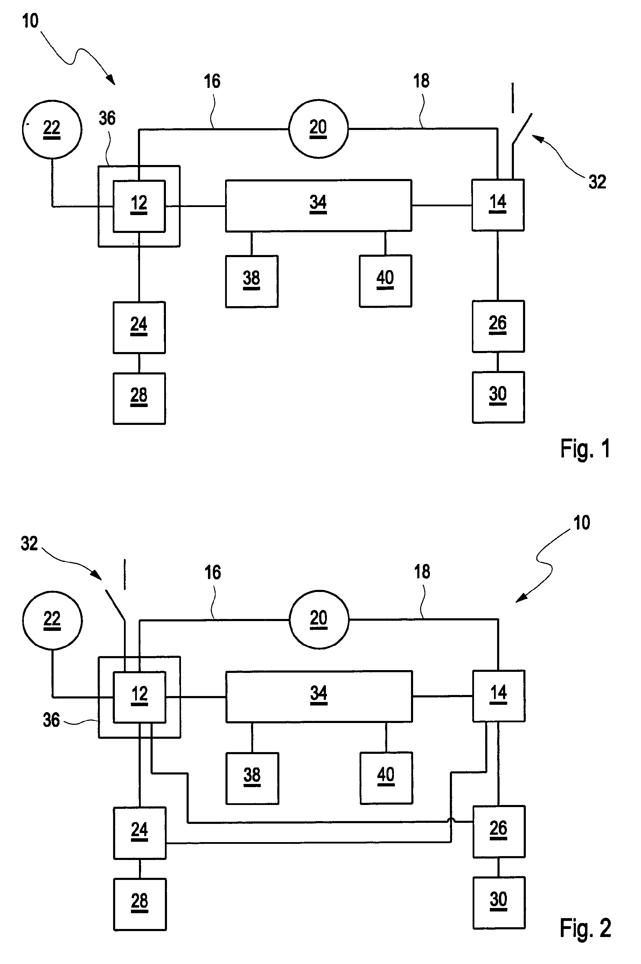

- Fig. 1: eine schematische Darstellung eines Feststellbremsensystems für einen Kraftwagen, welches zwei Steuereinheiten umfasst, mittels welchen zwei Aktuatoren steuerbar sind, welche dazu ausgelegt sind, jeweilige Radbremsen zu betätigen, wobei eine der beiden Steuereinheiten in einem ESP-Steuergerät des Kraftwagens integriert und die andere Steuereinheit mit einer Bedieneinrichtung verbunden ist;
- Fig. 2: eine weitere Ausführungsform des in Fig. 1 gezeigten Feststellbremsensystems, welches sich dadurch unterscheidet, dass beide Steuereinheiten jeweils mit beiden Aktuatoren verbunden sind und die in dem ESP-Steuergerät integrierte Steuereinheit mit der Bedieneinrichtung verbunden ist;

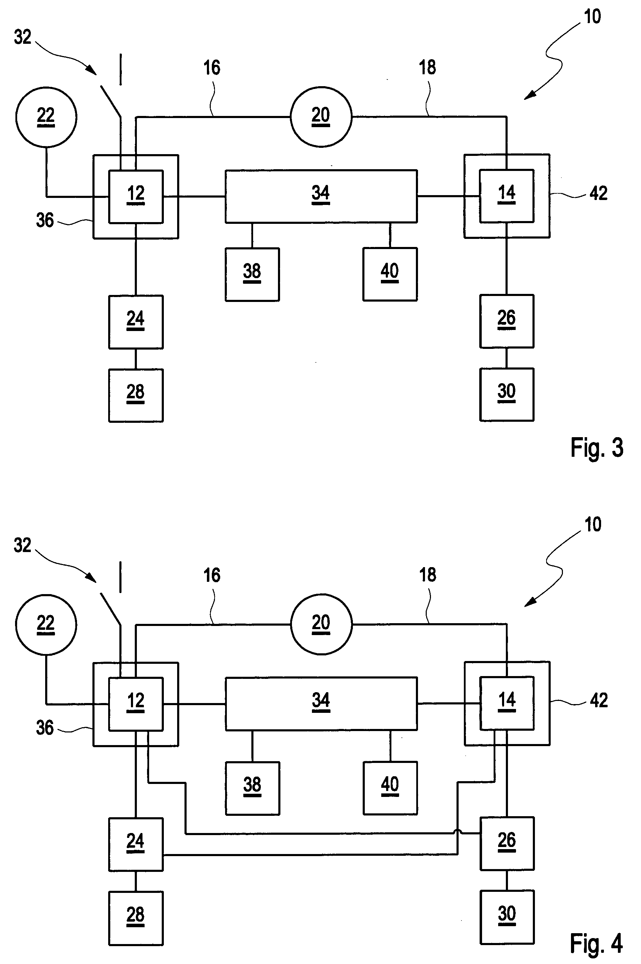

- Fig. 3: eine weitere Ausführungsform des Feststellbremsensystems, wobei die eine Steuereinheit nach wie vor in dem ESP-Steuergerät integriert ist, wohingegen die andere Steuereinheit in einem Getriebe-Steuergerät integriert ist, und beide Steuereinheiten jeweils nur mit einem der Aktuatoren verbunden sind; und in
- Fig. 4: eine weitere Ausführungsform des Feststellbremsensystems, wobei sich diese Ausführungsform von der in der Fig. 3 gezeigten dadurch unterscheidet, dass beide Steuereinheiten jeweils mit den beiden Aktuatoren verbunden sind.

In den Figuren werden gleiche oder funktionsgleiche Elemente mit den gleichen Bezugszeichen versehen.

Ein Feststellbremsensystem 10 für einen hier nicht dargestellten Kraftwagen ist in einer schematischen Ansicht in Fig. 1 gezeigt. Das Feststellbremsensystem 10 umfasst eine erste Steuereinheit 12 und eine zweite Steuereinheit 14, welche über gesonderte Leitungen 16, 18 mit einer Energiequelle 20 verbunden sind. Bei der Energiequelle 20 kann es sich beispielsweise um eine Batterie des hier nicht dargestellten Kraftwagens handeln, mittels welcher eine Versorgung der Steuereinheiten 12, 14 mit elektrischer Energie erfolgt. Die Steuereinheit 12 ist zudem mit einer weiteren Energiequelle 22 verbunden, mittels welcher eine redundante Energieversorgung des Feststellbremsensystems 10 sichergestellt wird. Beispielsweise kann es sich bei der weiteren Energiequelle 22 um eine zweite Batterie des Kraftwagens handeln. Alternativ kann die Energiequelle 22 auch beispielsweise als Kondensator oder dergleichen ausgebildet sein, mittels welchem eine redundante Energieversorgung der Steuereinheit 12 erzielt werden kann. Darüber hinaus ist es ebenfalls möglich, dass entgegen der hier gezeigten Darstellung nicht die Steuereinheit 12, sondern die Steuereinheit 14 mit der weiteren Energiequelle 22 verbunden ist. Ferner ist es ebenfalls möglich, dass die Steuereinheiten 12, 14 jeweils mit einer separaten, hier nicht dargestellten Energiequelle verbunden sind. Beispielsweise ist es bei einem Hybridfahrzeug möglich, dass die Steuereinheit 12 durch eine Traktionsbatterie des Hybridfahrzeugs mit Energie versorgt wird, wobei die andere Steuereinheit 14 durch eine weitere Batterie des Hybridfahrzeugs mit Energie versorgt wird, oder umgekehrt.

Die beiden Steuereinheiten 12, 14 sind jeweils mit den Aktuatoren 24, 26 verbunden, welche ihrerseits mit ihnen zugeordneten Radbremsen 28, 30 verbunden sind. Die Steuereinheiten 12, 14 sind dabei dazu ausgelegt, die Aktuatoren 24, 26 anzusteuern, um die Radbremsen 28, 30 zu schließen oder zu lösen. Das Schließen oder Lösen der Radbremsen 28, 30 erfolgt dabei beispielsweise auf einen Befehl eines Fahrzeugnutzers, indem er eine Bedieneinrichtung 32 betätigt, welche im vorliegend gezeigten Fall mit der Steuereinheit 14 verbunden ist. Die Bedieneinrichtung 32 ist dazu ausgelegt, Signale zur Betätigung der Radbremsen 28, 30 an diese Steuereinheit 14 zu übertragen, welche ihrerseits dazu ausgelegt ist, in Abhängigkeit von den Signalen zur Betätigung der Radbremsen 28, 30 zumindest einen der Aktuatoren 24, 26 zu steuern. Bei der Bedieneinrichtung 32 kann es sich im einfachsten Fall um einen elektrischen Taster oder Schalter handeln, wobei die Bedieneinrichtung 32 auch als Drehknopf, Schieber oder dergleichen ausgebildet sein kann.

Die Steuereinheiten 12, 14 sind über eine als Bussystem 34 ausgebildete Datenkommunikationsschnittstelle miteinander verbunden, sodass diese untereinander Signale austauschen können bzw. miteinander kommunizieren können. Im vorliegenden Fall ist die Steuereinheit 12 in einem ESP-Steuergerät 36 integriert, welches ebenfalls mit dem Bussystem 34 verbunden ist. Dadurch ist es möglich, dass die Steuereinheit 12 in dem ESP-Steuergerät 36 vorgesehene, hier nicht näher gezeigte Elemente, wie beispielsweise Prozessoren und dergleichen, nutzen kann, sodass diese Elemente für die Steuereinheit 12 nicht separat vorzusehen sind. Die Steuereinheit 14 ist in einem hier nicht gezeigten separaten Steuergerät integriert, welches ausschließlich zur Erfüllung von Funktionen des Feststellbremsensystems 10 vorgesehen ist. Im Falle eines Ausfalls des Bussystems 34 ist die Steuereinheit 12 dazu ausgelegt, den Aktuator 24 und somit die Radbremse 28 automatisch zu betätigen. Die Steuereinheit 12 ist dabei dazu ausgelegt, in Abhängigkeit von wenigstens einem, eine Bewegung des Fahrzeugs charakterisierenden Signal den Aktuator 24 zu steuern.

Im vorliegend gezeigten Fall ist das Bussystem 34 mit einem zentralen Steuergerät 38 und einem Airbag-Steuergerät 40 verbunden. Statt des Airbag-Steuergerätes 40 kann auch ein anderes Steuergerät verwendet werden. Das zentrale Steuergerät 38 umfasst eine Mehrzahl an hier nicht dargestellten Sensoren, welche in diesem vereint sind; beispielsweise kann es sich dabei um Drehzahl- und/oder Beschleunigungssensoren handeln, welche entsprechende Bewegungen des Kraftfahrzeugs bzw. seiner Räder erfassen können. Das Airbag-Steuergerät 40 kann zudem ein hier nicht näher bezeichnetes Längsbeschleunigungssignal des Kraftwagens bereitstellen. Diese die Bewegung des Fahrzeugs charakterisierenden Signale werden von dem zentralen Steuergerät 38 bzw. dem Airbag-Steuergerät 40 über das Bussystem 34 den Steuereinheiten 12, 14 bereitgestellt.

Bei einer gestörten Kommunikation zwischen den Steuereinheiten 12, 14 können in dem vorliegend gezeigten Fall die Steuereinheiten 12, 14 zumindest den ihnen jeweils zugeordneten Aktuator 24 bzw. 26 noch ansteuern, um den Kraftwagen zumindest durch Betätigen einer der Radbremsen 28, 30 gegen ein Wegrollen zu sichern. Zusätzlich ist es dabei vorgesehen, dass in einem hier nicht dargestellten Cockpit des Kraftwagens eine Warnmeldung, beispielsweise in Form einer aufleuchtenden Lampe oder dergleichen, ausgegeben wird, sodass ein Nutzer des Kraftwagens unverzüglich über eine Fehlfunktion des Feststellbremsensystems 10 informiert wird.

Es ist zudem zusätzlich möglich, dass die in dem ESP-Steuergerät 36 integrierte Steuereinheit 12 mit Signalen bzw. Informationen bezüglich einer oder mehrerer Raddrehzahlen des Kraftwagens versorgt wird, welche mittels des ESP-Steuergeräts 36 erfasst oder zumindest innerhalb desselben bereitgestellt werden.

In Fig. 2 ist in einer schematischen Darstellung eine weitere Ausführungsform des Feststellbremsensystems 10 gezeigt, welches sich von dem in Fig. 1 gezeigten Feststellbremsensystem 10 dadurch unterscheidet, dass die Steuereinheit 12 mit der Bedieneinrichtung 32 verbunden ist und die Steuereinheiten 12, 14 mit beiden Aktuatoren 24, 26 verbunden sind, sodass jedes der Steuergeräte 12, 14 jeden der Aktuatoren 24, 26 ansteuern kann. Um eine geregelte Ansteuerung der Aktuatoren 24, 26 zu ermöglichen, kommunizieren die Steuereinheiten 12, 14 über das Bussystem 34 miteinander, wodurch die Ansteuerung der Aktuatoren 24, 26 mittels der Steuereinheiten 12, 14 geregelt wird. Beispielsweise ist es möglich, dass die Steuereinheit 12 über das Bussystem 34 der Steuereinheit 14 den Befehl gibt, zu einem bestimmten Zeitpunkt den Aktuator 26 zu betätigen oder zu lösen, zu welchem die Steuereinheit 12 selbst den Aktuator 24 ansteuert, um die Radbremse 28 anzuziehen oder zu lösen. Durch die hier gezeigte redundante Verbindung der Steuereinheiten 12, 14 mit jeweils beiden Aktuatoren 24, 26 wird in einem Störfall von einer der beiden Steuereinheiten 12, 14 zumindest sichergestellt, dass die noch funktionsfähige Steuereinheit 12 oder 14 beide Radbremsen 28, 30 betätigen kann.

In Fig. 3 ist eine weitere Ausführungsform des Feststellbremsensystems 10 gezeigt. Die Steuereinheit 14 ist in einer Getriebesteuereinheit 42 integriert, wobei die Steuereinheit 14 auf hier nicht näher bezeichnete Elemente, beispielsweise Prozessoren und dergleichen, der Getriebesteuereinheit 42 zugreifen bzw. diese nutzen kann, sodass diese Elemente bzw. Baueinheiten nicht separat für die Steuereinheit 14 vorgesehen werden müssen. Bis auf den Unterschied, dass die Steuereinheit 14 in der Getriebesteuereinheit 42 integriert ausgebildet ist und nicht, wie in dem Ausführungsbeispiel von Fig. 1, in einem separaten Steuergerät ausgebildet ist, und die Steuereinheit 12 mit der Bedieneinheit 32 verbunden ist, handelt es sich in den Fig. 1 und 3 um im Wesentlichen gleiche Ausführungsformen des Feststellbremsensystems 10.

In Fig. 4 ist schließlich eine weitere Ausführungsform des Feststellbremsensystems 10 gezeigt. Diese unterscheidet sich von der in der Fig. 3 gezeigten Ausführungsform dadurch, dass die Steuereinheiten 12, 14 jeweils mit den beiden Aktuatoren 24, 26 verbunden sind und diese steuern können.

## Patentansprüche

1. Feststellbremsensystem (10) für ein Fahrzeug, insbesondere für einen Kraftwagen, mit zwei Steuereinheiten (12, 14), mittels welchen zwei Aktuatoren (24, 26) steuerbar sind, welche dazu ausgelegt sind, jeweilige Radbremsen (28, 30) zu betätigen, wobei die Steuereinheiten (12, 14) über gesonderte Leitungen (16, 18) mit einer Energiequelle (20) verbunden sind,
**dadurch gekennzeichnet, dass**
- ausschließlich eine der Steuereinheiten (12, 14) mit einer Bedieneinrichtung (32) verbunden ist;
- die Bedieneinrichtung (32) dazu ausgelegt ist, Signale zur Betätigung der Radbremsen (28, 30) an diese Steuereinheit (12, 14) zu übertragen;
- die Steuereinheit (12, 14) dazu ausgelegt ist, in Abhängigkeit von den Signalen zur Betätigung der Radbremsen (28, 30) zumindest einen der Aktuatoren (24, 26) zu steuern.

2. Feststellbremsensystem (10) nach Anspruch 1,
**dadurch gekennzeichnet, dass**
eine der Steuereinheiten (12, 14) mit einer weiteren Energiequelle (22) verbunden ist.

3. Feststellbremsensystem (10) nach Anspruch 1 oder 2,
**dadurch gekennzeichnet, dass**
die Steuereinheiten (12, 14) über eine Datenkommunikationsschnittstelle (34) miteinander verbunden sind, wobei die Steuereinheiten (12, 14) dazu ausgelegt sind, über die Datenkommunikationsschnittstelle (34) miteinander zu kommunizieren.

4. Feststellbremsensystem (10) nach einem der vorhergehenden Ansprüche,
**dadurch gekennzeichnet, dass**
die Steuereinheiten (12, 14) jeweils dazu ausgelegt sind, beide Aktuatoren (24, 26) zu steuern.

5. Feststellbremsensystem (10) nach einem der vorhergehenden Ansprüche,
**dadurch gekennzeichnet, dass**
die Steuereinheiten (12, 14) dazu ausgelegt sind, in Abhängigkeit von wenigstens einem eine Bewegung des Fahrzeugs charakterisierenden Signal die Aktuatoren (24, 26) automatisch zu steuern.

6. Feststellbremsensystem (10) nach einem der vorhergehenden Ansprüche,
**dadurch gekennzeichnet, dass**
die nicht mit der Bedieneinrichtung (32) verbundene Steuereinheit (12, 14) in einem Automatikmodus betreibbar ist, falls die mit der Bedieneinrichtung (32) verbundene Steuereinheit (12, 14) und/oder die Bedieneinrichtung (32) eine Betriebsstörung aufweisen.

7. Feststellbremsensystem (10) nach einem der vorhergehenden Ansprüche,
**dadurch gekennzeichnet, dass**
zumindest eine der Steuereinheiten (12, 14) in einem Steuergerät (36, 42) des Fahrzeugs angeordnet ist, welches dazu ausgelegt ist, zumindest ein von den Aktuatoren (24, 26) verschiedenes Element des Fahrzeugs zu steuern.

8. Feststellbremsensystem (10) nach einem der vorhergehenden Ansprüche,
**dadurch gekennzeichnet, dass**
zumindest eine der Steuereinheiten (12, 14) in einem separaten Steuergerät des Fahrzeugs angeordnet ist.

9. Feststellbremsensystem (10) nach einem der Ansprüche 1 bis 7,
**dadurch gekennzeichnet, dass**
die Steuereinheiten (12, 14) jeweils in zwei voneinander verschiedenen Steuergeräten (36, 42) des Fahrzeugs angeordnet sind, welche jeweils dazu ausgelegt sind, zumindest ein von den Aktuatoren (24, 26) verschiedenes Element des Fahrzeugs zu steuern.

## Claims

1. Parking brake system (10) for a vehicle, in particular for a motor vehicle, comprising two control units (12, 14), by means of which two actuators (24, 26), which are designed to actuate respective wheel brakes (28, 30), can be controlled, wherein the control units (12, 14) are connected to a power source (20) via separate lines (16, 18), **characterised in that**
- exclusively one of the control units (12, 14) is connected to an operating device (32);
- the operating device (32) is designed to transmit signals to said control unit (12, 14) for actuation of the wheel brakes (28, 30);
- and the control unit (12, 14) is designed to control at least one of the actuators (24, 26), dependent on the signals for actuation of the wheel brakes (28, 30).

2. Parking brake system (10) according to claim 1, **characterised in that** one of the control units (12, 14) is connected to a further power source (22).

3. Parking brake system (10) according to claim 1 or 2, **characterised in that** the control units (12, 14) are connected together via a data communication interface (34), wherein the control units (12, 14) are designed to communicate with each other via the data communication interface (34).

4. Parking brake system (10) according to one of the preceding claims, **characterised in that** the control units (12, 14) are each designed to control both actuators (24, 26).

5. Parking brake system (10) according to one of the preceding claims, **characterised in that** the control units (12, 14) are designed to automatically control the actuators (24, 26) dependent on at least one signal characteristic of a movement of the vehicle.

6. Parking brake system (10) according to one of the preceding claims, **characterised in that** the control unit (12, 14), which is not connected with the operating device (32) can be operated in an automatic mode, in the event that an operating malfunction arises in the control unit (12, 14) connected to the operating device (32) and/or in the operating device (32).

7. Parking brake system (10) according to one of the preceding claims, **characterised in that** at least one of the control units (12, 14) is arranged in a control device (36, 42) of the vehicle, which is designed to control at least one element of the vehicle different from the actuators (24, 26).

8. Parking brake system (10) according to one of the preceding claims, **characterised in that** at least one of the control units (12, 14) is arranged in a separate control device of the vehicle.

9. Parking brake system (10) according to one of claims 1 to 7, **characterised in that** the control units (12, 14) are each arranged in two different control devices (36, 42) of the vehicle, which are each designed to control at least one element of the vehicle different from the actuators (24, 26).

## Revendications

1. Système de frein de stationnement (10) pour un véhicule, en particulier pour un véhicule automobile, avec deux unités de commande (12, 14), au moyen desquels peuvent être commandés deux actionneurs (24, 26), qui sont conçus pour commander des freins de roues respectives (28, 30), dans lequel les unités de commande (12, 14) sont raccordés à une source d'énergie (20) via des conduites séparées (16, 18),
**caractérisé en ce que** :
- l'une des unités de commande (12, 14) est exclusivement raccordée à un dispositif de manoeuvre (32) ;
- le dispositif de manoeuvre (32) est conçu de manière à transférer des signaux de commande des freins de roue (28, 30) à cette unité de commande (12, 14) ;
- l'unité de commande (12, 14) est conçue pour commander au moins l'un des actionneurs (24,26) en fonction des signaux pour la commande des freins de roue (28,30).

2. Système de frein de stationnement (10) selon la revendication 1,
**caractérisé en ce que** :
l'une des unités de commande (12, 14) est raccordée à une autre source d'énergie (22).

3. Système de frein de stationnement (10) selon la revendication 1 ou 2,
**caractérisé en ce que** :
les unités de commande (12, 14) sont raccordées l'une à l'autre via une interface de communication de données (34), dans lequel les unités de commande (12, 14) sont conçues pour communiquer l'une avec l'autre via l'interface de communication de données (34).

4. Système de frein de stationnement (10) selon l'une quelconque des revendications précédentes,
**caractérisé en ce que** :
les unités de commande (12, 14) sont respectivement conçues pour commander les deux actionneurs (24, 26).

5. Système de frein de stationnement (10) selon l'une quelconque des revendications précédentes,
**caractérisé en ce que** :
les unités de commande (12, 14) sont conçues pour commander automatiquement les actionneurs (24, 26) en fonction d'au moins un signal caractérisant un déplacement du véhicule.

6. Système de frein de stationnement (10) selon l'une quelconque des revendications précédentes,
**caractérisé en ce que** :
l'unité de commande (12, 14) non raccordée au dispositif de manoeuvre (32) peut être commutée en mode automatique au cas où l'unité de commande (12, 14) raccordée au dispositif de manoeuvre (32) et/ou le dispositif de manoeuvre (32) présente(nt) une panne de fonctionnement.

7. Système de frein de stationnement (10) selon l'une quelconque des revendications précédentes,
**caractérisé en ce que** :
au moins l'une des unités de commande (12, 14) est aménagée dans un appareil de commande (36, 42) du véhicule, qui est conçu pour commander au moins un élément du véhicule différent des actionneurs (24, 26).

8. Système de frein de stationnement (10) selon l'une quelconque des revendications précédentes,
**caractérisé en ce que** :
au moins l'une des unités de commande (12, 14) est aménagée dans un appareil de commande séparé du véhicule.

9. Système de frein de stationnement (10) selon l'une quelconque des revendications 1 à 7,
**caractérisé en ce que** :
les unités de commande (12, 14) sont aménagées respectivement dans deux appareils de commande (36, 42) différents l'un de l'autre, qui sont respectivement conçus pour commander au moins un élément du véhicule différent des actionneurs (24, 26).
